# EUROPEAN PATENT SPECIFICATION

(11) **EP 0 888 567 B1**
(45) Date of publication and mention of the grant of the patent: **27.03.2002**
(21) Application number: 96944876.0
(22) Date of filing: 23.12.1996
(51) Int. Cl.: G02B 6/38

(54) **OPTICAL FIBER CONNECTOR USING FIBER SPRING FORCE AND ALIGNMENT GROOVE**
FASEROPTISCHER STECKER MIT EINER ALS FEDERKRAFT WIRKENDEN FASER UND EINER NUT ZUM AUSRICHTEN
CONNECTEUR POUR FIBRES OPTIQUES UTILISANT LA FORCE ELASTIQUE D'UNE FIBRE ET COMPORTANT UNE RAINURE D'ALIGNEMENT

(30) Priority: 22.12.1995 US 577740; 07.06.1996 US 660644; 13.06.1996 US 664039; 29.10.1996 US 29328 P
(43) Date of publication of application: 07.01.1999
(73) Proprietor: MINNESOTA MINING AND MANUFACTURING COMPANY, St. Paul, Minnesota 55133-3427 (US)
(72) Inventor: BIRRELL, Barbara, L., Austin, TX 78726-9000 (US); BORER, Victor, J., Austin, TX 78726-9000 (US); DOSS, Donald, G., Austin, TX 78726-9000 (US); HENSON, Gordon, D., Saint Paul, MN 55133-3427 (US); IGL, Scott, A., Saint Paul, MN 55133-3427 (US); LEE, Nicholas, A., Saint Paul, MN 55133-3427 (US)
(74) Representative: Hilleringmann, Jochen, Dipl.-Ing.
(86) International application number: US9620227
(87) International publication number: WO9723796

(56) References cited:
- EP-A- 0 546 936
- FR-A- 2 696 841
- US-A- 4 045 121
- US-A- 4 277 135
- US-A- 5 080 461
- US-A- 5 381 498

## Description

The present invention generally relates to devices for connecting a telecommunications line (including voice, data, video, etc.) to another line or to a terminal, and more particularly to a device for interconnecting at least one optical fiber with another optical fiber or with an optoelectronic component.

Optical fibers have replaced copper wire as the preferred medium for carrying telecommunications signals. As with copper wire, it is necessary to provide for the interconnection of optical fibers, during installation, repair or replacement of the fibers, and to terminate the fibers onto active optical devices. There are generally two kinds of interconnection devices, splices and connectors. The term "splice" usually refers to a device which provides a permanent connection between a pair of optical fibers. The term "connector," in contrast, usually refers to a device which may be engaged and disengaged repeatedly, often with a different plug or receptacle. A connector may also refer to the plug portion of a fiber termination, which is attached to an optical device. Optical devices include, for example, optical sensors (photoelectric diodes) and light sources (LED's, laser diodes). The termination of an optical fiber may be indirect, i.e., the fiber may be connected to some other (passive) optical device such as a beam splitter or polarizer, before the light beam is directed to the active optical device. The present invention is generally directed to a connector, although this term should not be construed in a limiting sense since the present invention may inherently provide a permanent, as well as temporary connection or termination.

In the fiber optic connector described in U.S.-A-5,381,498, the connector has a plug and a receptacle, the plug having a fiber-receiving, V-shaped groove for each fiber to be interconnected, with the end of the fiber terminating in the middle of the groove. The receptacle has a plate which retracts as the plug is inserted, whereby another fiber is lowered into the V-groove of the plug. Upon full insertion of the plug, the two fibers ends are in contact, and the fiber secured to the receptacle is elastically deformed to maintain a continuous compressive load between the terminal ends of the fibers. The connector provides for the quick disconnection and reconnection of a plurality of optical fiber pairs, without the use of ferrules or other alignment members. High strength fiber may be used to withstand repeated insertions and bowing of the fibers. The exact lengths of fibers (i.e., the relative locations of their terminal ends in the plug and receptacle) are not critical since tolerance is provided by the slack taken up in the bowed receptacle fiber (the terminal portion of the fiber secured to the plug does not bow, but always remains straight). The ends of the fibers may be prepared by simply cleaving and beveling; the end faces may optionally be cleaved at an angle (i.e., non-orthogonal to the fiber axis) to reduce signal reflections.

Many fiber optic splices employ plate elements having fiber-receiving grooves, with means for clamping the terminal ends of the fibers in a common groove. Some of these devices are designed to interconnect a plurality of pairs of fibers, such as the splice shown in U.S.-A-5,151,964. In U.S.-A-4,028,162, fibers approach alignment grooves at a glancing angle and are held temporarily while a connector plate is adhered to the interconnected fibers. For other examples of techniques involving bowed fibers entering alignment grooves, see U.S.-A-4,077,702, US-A-4,148,559, US-A-4,322,127 and US-A-5,080,461, and FR-A-2,660,442. Some of the connector designs using the principle of bowing a fiber into a fiber-alignment groove are rather complex and require many parts, such as the designs seen in U.S.-A-4,045,121, US-A-4,218,113 and US-A-4,767,180.

The connector US-A-5,381,498 makes use of this fiber bowing principle, but suffers certain other disadvantages. For example, the plug design allows dust to easily settle on the tips of the fibers, since these tips are exposed above the fiber-receiving grooves. Fibers in the receptacle may similarly become contaminated since there is no door or other means to close off the opening when the plug is not present. While this known connector has fewer parts than most ferrule connectors, it would still be preferable to eliminate the moving parts, such as the sliding plate and spring inside the receptacle. That design also recommends the use of high-strength fibers in the socket, making it less compatible with an embedded base of standard fiber.

From each of EP-A-0 546 936 and US-A-4 045 121 a fiber optic termination device is known as defined in the preamble of claim 1.

It is the object of the present invention to provide a fiber optic termination device in which the access to the optical fiber is performed more easily and more reliably upon insertion of the plug into the receptacle.

According to the invention, this object is solved in that a fiber optic termination device is provided as defined in claim 1. The sub-claims relate to preferred embodiments of the invention.

The present invention provides an optical fiber connector generally comprising a plug having at least one fiber terminating therein, releasably attached to a receptacle which may have another fiber secured therein, or which may house an active optical component. The plug includes a fiber holder securing a terminal portion of an optical fiber, and an elongate, hollow plug body having first and second ends, the first end being open and attached to the plug fiber holder with the terminal portion of the plug fiber extending into an interior of the plug body, the interior having sufficient space to allow the terminal portion of the plug fiber to bow, and the second end having a slot providing access to the terminal portion of the fiber. The receptacle has an opening sized to receive said second end of said plug body, and a projection or finger adapted to enter the slot in the plug body at an oblique angle with respect to the plug body axis. The finger has a fiber-alignment groove therein, located to receive the terminal portion of the plug fiber when the plug body is inserted in the receptacle. The plug body further includes a plug door, slidable between a closed position wherein the plug door covers the slot and an open position wherein the slot is unobstructed by the plug door. The plug door has camming surfaces adapted to urge the door member sideways, and the receptacle has a door with corresponding camming surface adapted to cam against the camming surfaces of the plug door upon insertion of said plug body in said receptacle.

In the embodiment for fiber-to-fiber interconnection, the receptacle further has a receptacle fiber holder securing a terminal portion of another optical fiber whose end face is located along an intermediate section of said fiber-alignment groove. The receptacle fiber may be retained properly in the groove by a fiber hold-down. In the embodiment for termination to an electro-optic device, the finger is attached to a base having a fiber stop. In either embodiment, the plug fiber extends generally straight within the plug body when the plug is removed from the receptacle, but the plug fiber is sufficiently long such that, when the plug is fully inserted in the receptacle, the plug fiber becomes bowed to maintain a continuous compressive load against either the end face of the receptacle fiber, or the fiber stop. The bending of the plug fiber also maintains the fiber firmly nested in the fiber-alignment groove.

First latch means are provided for releasably securing the plug body in the receptacle, and second latch means are provided for releasably mounting the receptacle on a support surface. The first latch means may be formed in an extension or landing of the plug fiber holder. This landing may also have upstanding posts which extend into the interior of the plug body to limit skewing of the terminal portion of the plug fiber. The plug may be biased in the interconnected position to be pushed back against the first latch means to minimize the effect of manufacturing tolerances.

The connector may be quickly engaged and disengaged, and is easy to install. The design may be adapted to provide for the interconnection of a plurality of pairs of optical fibers.

The invention will best be understood by reference to the accompanying drawings, wherein:
Figure 1 is a side view of a longitudinal section of one embodiment of the present invention, depicting a fiber optic connector including a plug and receptacle;
Figure 2 is a perspective view of the plug and receptacle of Figure 1, with a partial section revealing the bowed fibers in the plug interior;
Figure 3 is a perspective view of one embodiment of the plug used with the present connector, with a sliding door;
Figure 4 is a perspective view of another embodiment of the plug used with the present connector, with the plug shroud omitted to reveal interior details;
Figure 5 is a perspective view of one embodiment of the receptacle used with the present connector, with a hinged door having camming surfaces which cooperate with camming surfaces on the plug door;
Figure 6 is a perspective view of a termination fixture which may be used in the receptacle of the present invention;
Figure 7 is a side view of a longitudinal section of the present connector as used for termination rather than fiber-to-fiber interconnection;
Figure 8 is a sectional view of a tool used to clean the tips of the fibers in a plug; and
Figure 9 is a sectional view of a tool used to clean the tips of the fibers in a receptacle.

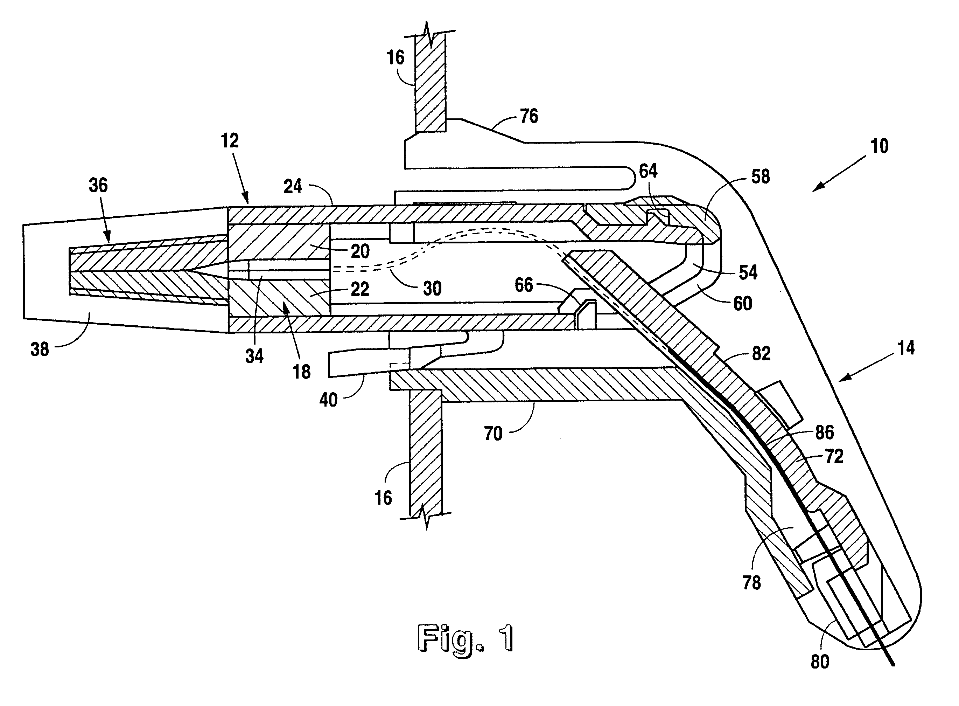

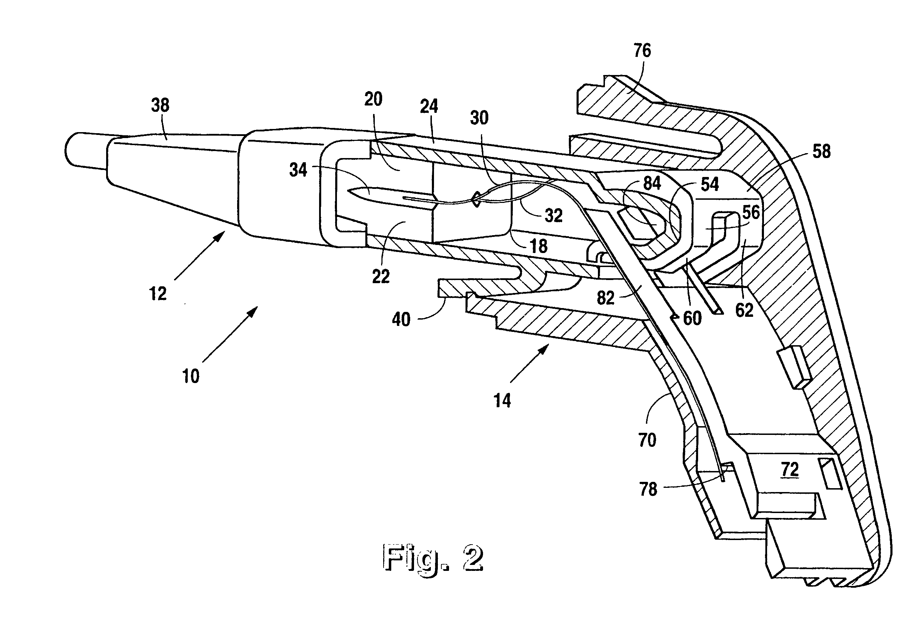

With reference now to the figures, and in particular with reference to Figures 1 and 2, there is depicted one embodiment **10** of the fiber optic connector of the present invention. Connector **10** is generally comprised of an elongate plug **12** and a socket or receptacle **14**. Figure 1 is a longitudinal section of connector **10** showing plug **12** fully inserted in receptacle **14**, and receptacle **14** mounted on a support surface or bulkhead **16**. Figure 2 is a perspective view with bulkhead **16** omitted, also with a partial longitudinal section to illustrate the interior of the connector. The depicted embodiment provides for the interconnection of two pairs of fibers, but those skilled in the art will appreciate that the inventive concepts described herein extend to single pair interconnection as well as interconnection of a multiplicity of pairs.

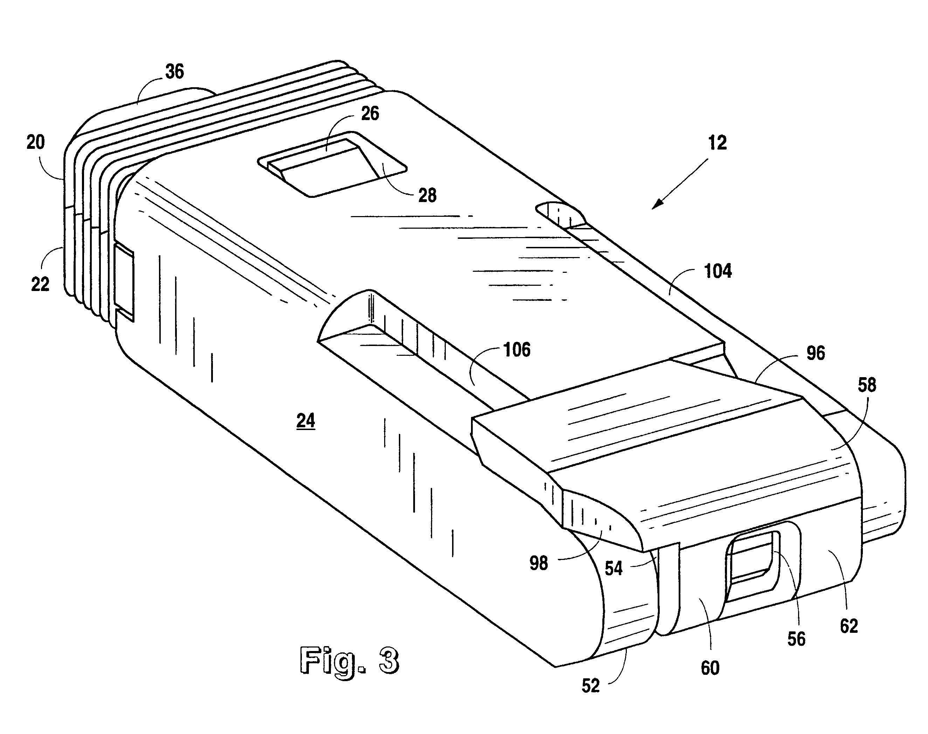

Plug **12**, shown also in Figure 3, includes a fiber holder **18** which may be constructed of two clamping elements or blocks **20** and **22**, and a plug body or shroud **24** which is attached to fiber holder **18**. Shroud **24** may be removably attached to plug fiber holder **18** by means of, e.g., latches **26** integrally molded onto blocks **20** and **22**, which engage cutouts **28** formed in corresponding walls of shroud **24**. Fibers **30** and **32** which are to be interconnected or terminated pass through holder **18** and into the hollow interior of shroud **24**. The terminal portions of the fibers are bare, that is, they are not affixed to any alignment member such as a ferrule. Shroud **24** therefore serves not only to assist in physically locating plug **12** in receptacle **14**, but also to provide protection for the otherwise exposed terminal portions of the fibers (the shroud could be made retractable to fully expose the fiber tips, if required). Holder **18** has fiber-receiving grooves **34** formed in the adjacent surfaces of blocks **20** and **22**; these two components may be identical parts. Holder **18** may secure the fibers, for example, by clamping, adhesives or both. Alternative means may be used to secure the fibers to holder **18**. Holder **18** may have an extension **36** surrounding the fibers for additional strain relief and clamping. A boot **38** may be provided for further strain relief and capturing of the strengthening members in the fiber cable (KEVLAR strands), and to assist in handling plug **12**. The strengthening members need not be crimped but they may be adhered onto the holder. Strain relief of the strengthening members is attained by a force fit of straightwall section of the plug fiber holder within the boot. This is dependent upon the choice of materials used for the boot and the plug fiber holder, and yields a design that does not require a crimp ring and which assists in ease of manufacture and reduces the number of needed components. Alternatively, an extension may be formed on the holder with a "tenure" (irregular) path for clamping the strands and retaining the boot with an interference fit. "One-way" barbs on the surface of the plug fiber holder assist in the attachment of the boot to the plug fiber holder, which also assists in the attachment of the cable to the plug.

In the embodiment of Figures 1 and 2, a latch **40** is integrally molded onto one side of shroud **24** to releasably secure plug **12** to receptacle **14**. Latch **40** also imparts mechanical polarization to the plug, i.e., it can only be inserted into receptacle **14** in one orientation. Plug **12** may be biased in the interconnected position, e.g., by a springboard (a flexible cantilever) formed inside receptacle **14**, to be pushed back against latch **40** to minimize the effect of manufacturing tolerances.

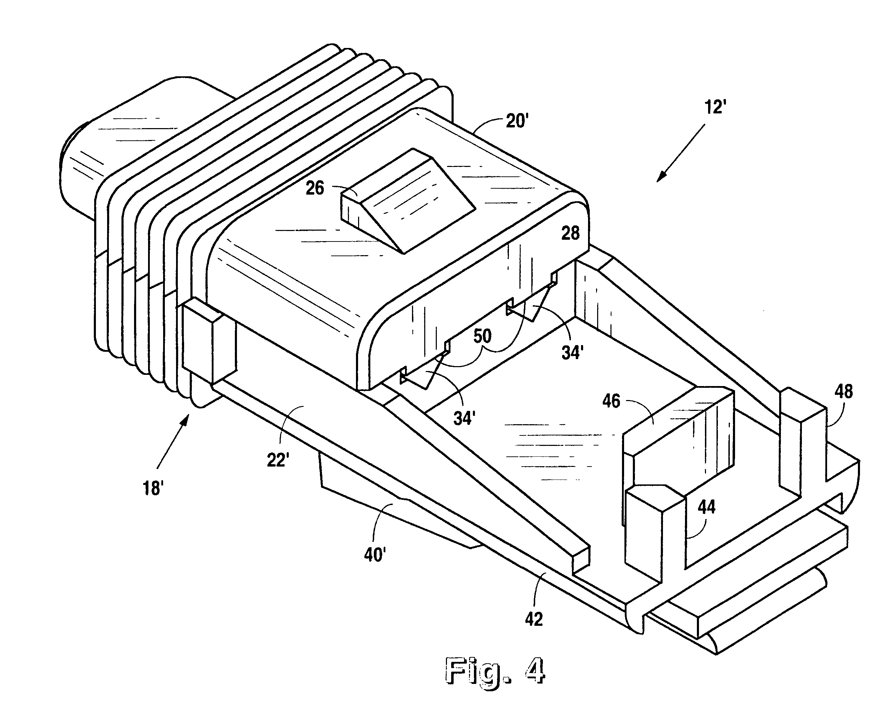

Figure 4 depicts a slightly different embodiment **12'** of a plug usable with the connector of the present invention. This embodiment employs a similar shroud, which is omitted from Figure 4 to better illustrate the alternative fiber holder **18'** and interior features. Holder **18'** is again formed from two blocks **20'** and **22'**, but those two blocks are not identical in this embodiment. First, block **22'** has an extension or landing **42** which has several upstanding posts **44, 46** and **48**. These posts serve to guide the fibers within shroud **24** in proper position for location in the V-grooves of receptacle **14** as discussed further below, and limit skewing of the fibers, ensuring proper alignment of the fiber tips with openings in shroud **24**. Latch **40'** is molded into block **22'**, along the underside of landing **42**. Second, the fiber passageways in holder **18'** are formed by providing V-shaped grooves **34'** only in block **22'**, with the corresponding surface of block **20'** being flat to provide only three fiber-clamping surfaces. V-grooves **34'** are further recessed in block **22'**, and steps **50** are formed on block **20'** which seat in the recesses and facilitate proper attachment of the blocks together.

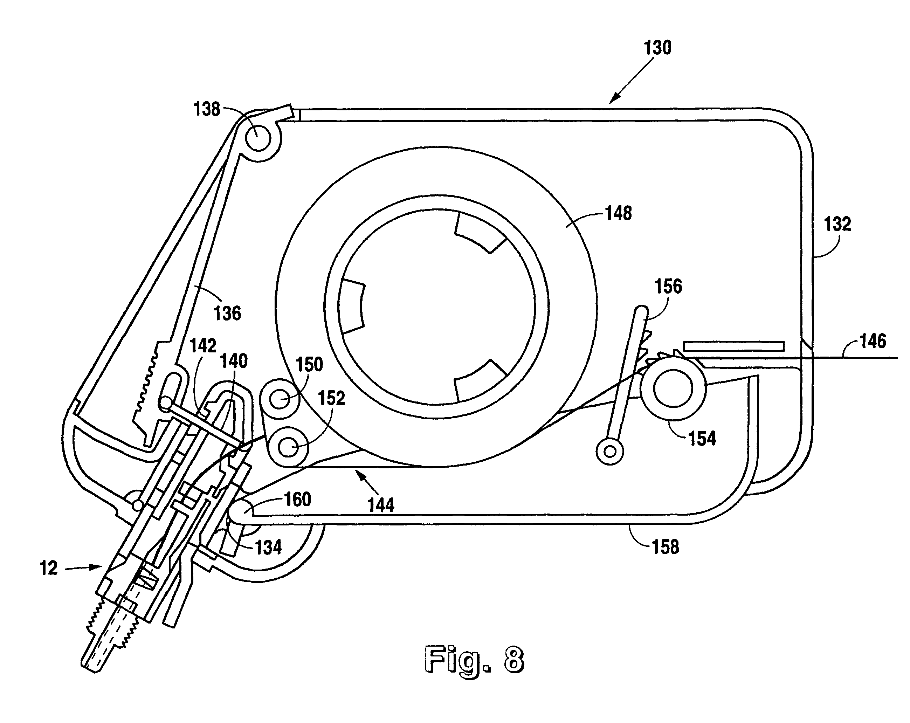

Fibers **30** and **32** extend generally straight within shroud **24** whenever plug **12** (or plug **12'**) is not installed in receptacle **14**. The fibers are "generally" straight in that they extend without significant bowing, although there might be some minute flexing of the fibers as a result of gravity. Sufficient space is provided within shroud **24**, however, to allow the fibers to bow significantly, as seen in Figures 1 and 2, when the plug is fully inserted into the receptacle. The forward end **52** of shroud **24** has a pair of slots **54** and **56** formed therein which provide access to the terminal ends of the fibers located within shroud **24**. A hood or door **58** is slidably attached to forward end **52** of shroud **24**, with two covers or bars **60, 62** which overlap slots **54** and **56**, respectively, when door **58** is in the closed position of Figure 3. When door **58** slides to the open position, bars **60** and **62** move to allow access to fibers **30** and **32** via slots **54** and **56**, respectively, without the need for the fibers to extend outside of shroud **24**, although this would be acceptable in alternative designs. Door **58** is slidably attached to shroud **24** with a snap fit resulting from two tongue-and-groove arrangements **64** and **66** (Figure 1). In addition to preventing dust from entering through the slots, door **58** also prevents any light in the plug fibers from escaping and injuring a user's eyes. As discussed below in conjunction with Figure 8, door **58** may also reveal, in the open position, one or more holes on the top of shroud **24** which may receive push rods to tip the fibers out openings **54** and **56** to allow cleaning of the fiber tips. For example, a plug may be used (not shown) in which the primary differentiation is the manner of delivery of the plug fibers into the V-grooves of the receptacle. This alternative plug design has a body with two distinct parts, a body which mates with the socket, and a boot which is connected to the body by a hinge. The hinge allows the plug body and boot to lie at a 180° angle (i.e., extend straight) when the plug is inserted into the socket. The boot is then rotated down so the angle between the body and boot becomes less than 180°. This forces the plug fibers out of the protective plug body and into the receptacle V-grooves. This design may further be adapted into a plug which is not hinged, but rotational movement is still used to move the plug fibers into the receptacle V-grooves. The V-grooves do not need to feed through the slots. These designs also allow the plug boot to lie flush against the wall and do not require the receptacle V-grooves to enter the shroud, and the longer plug fiber and greater rotational angle provide for additional manufacturing and assembly tolerances.

A test plug may also be used to test the operation of the receptacle. This plug would be essentially identical to the previously described plug, except that it receives a single fiber looped to have both ends extending toward the receptacle. In this manner, a signal may be sent down one of the receptacle fibers, received by the loop-back fiber in the plug, and then rerouted to the other receptacle fiber, which carries the signal to a test detection system.

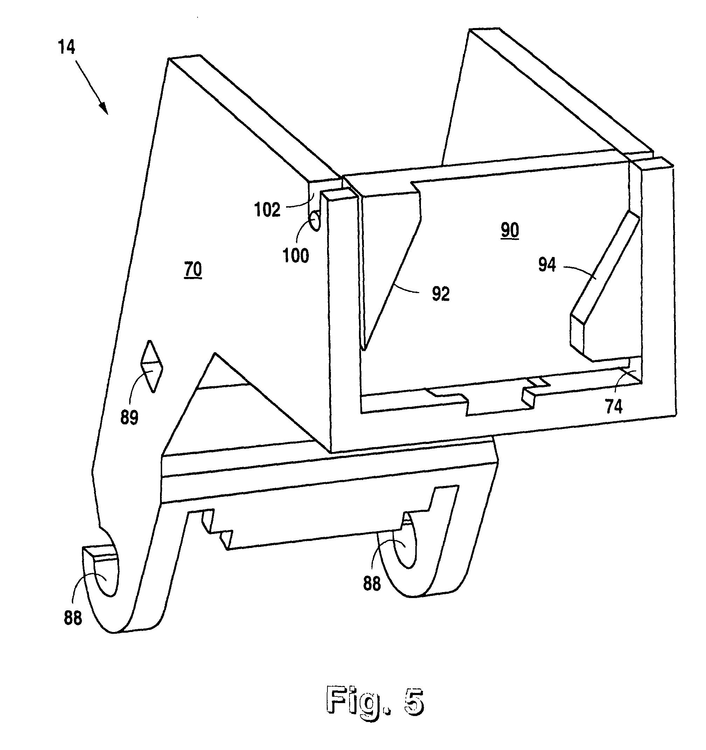

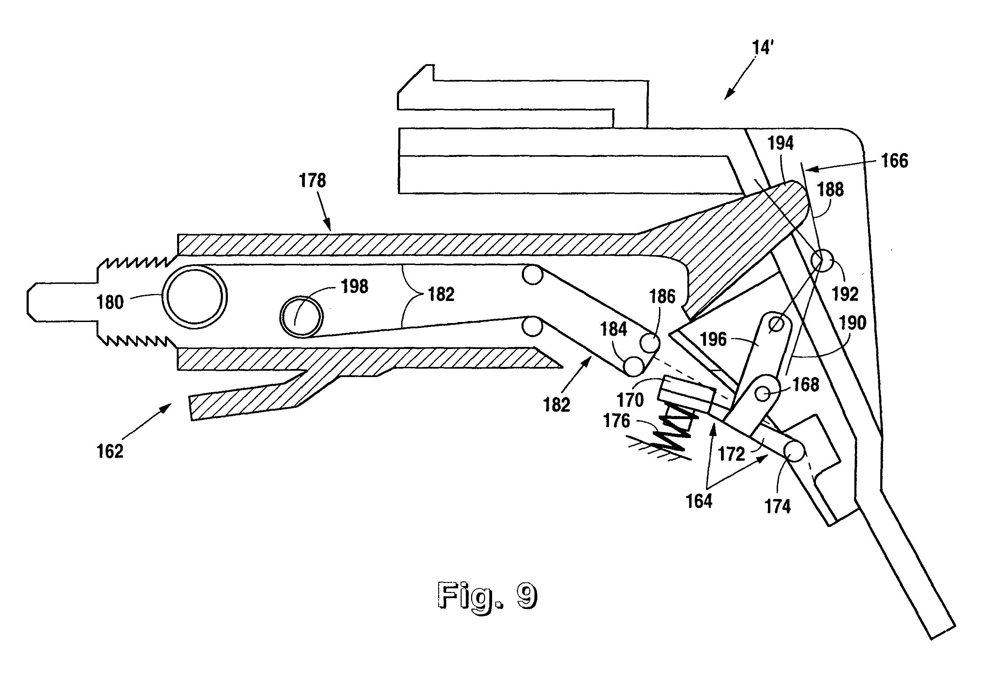

Receptacle **14**, also shown in Figure 5, includes a body or housing **70** and another fiber holder **72**. Housing **70** has an opening **74** whose size and shape generally corresponds to that of the forward end **52** of plug **12.** Housing **70** may also have appropriate features (such as latch arms **76**) allowing it to be releasably mounted to bulkhead **16** which may be, for example, a patch panel or workstation outlet (wall box faceplate). The latch means may provide for mounting from the front of the panel, to allow all preparatory work to be done at the front side of the panel, or may provide for mounting from the rear of the panel, to allow all preparatory work to be done at the back side of the panel. The receptacle fibers (only one of which, **78**, is visible in figures 1 and 2) are secured to receptacle fiber holder **72** by clamping as well, using a clamping plate **80** adapted to grip the fibers at a first end of holder **72**. The terminal ends of the receptacle fibers extend into fiber-alignment grooves formed in projections or fingers **82** and **84** at a second end of receptacle fiber holder **72**. The grooves are preferably V-shaped, although they may be more rounded, i.e., U-shaped. An intermediate section **86** of the fiber-alignment grooves is curved so as to maintain the receptacle fibers in the grooves by the elastic urging of the slightly bowed fibers. Additional means may be provided, such as the fiber hold-down shown in Figure 9, to retain the fibers firmly in the grooves. The fibers do not extend to the very tips of fingers **82** and **84** but rather terminate a sufficient distance from the tips to allow proper support of the plug fibers when the connector is in use. If the fiber-to-fiber contact occurs very near the tips of the V-grooves (or if the plug is inserted too far), the plug fiber can bend beyond the groove and lifted away from the apex, breaking the connection.

Receptacle **14** may have as many of these fingers with fiber-alignment grooves as there are fibers in plug **12**. Fingers **82** and **84** are shaped to project into slots **54** and **56**, respectively, of shroud **24** when plug **12** is fully inserted into receptacle **14**. Fingers **82** and **84** enter shroud **24** at an oblique (nonzero) angle with respect the plug axis, i.e., the axis defined by either of the plug fibers **30** or **32** when they are extending straight within shroud **24**. This angle is preferably about 42°, which balances concerns regarding fiber end face contact pressure, fiber forces directed into the V-groove, the effects of friction, and the desired tolerance window (a larger angle increases tolerances). Since the receptacle fibers are not directed toward opening **74**, there is no danger of escaping light injuring a user's eyes. Receptacle fiber holder **72** is pivotally attached to housing **70** by providing posts on the first end of holder **72** which snap into cutouts or hooks **88** formed at one end of receptacle housing **70**. Holder **72** releasably locks into place using bumps or studs formed on the side of the holder, which engage holes **89** in receptacle housing **70**. An alternative design for the receptacle fiber holder may be used in which the holder is molded as a single piece with a breakaway top or cover plate that can snap onto its base, the base having the fiber-positioning grooves.

Receptacle **14** has a flap or door **90** to minimize entry of contaminants through opening **74**. The disclosed embodiment uses a receptacle door which cooperates with the plug door to actuate plug door **58** between closed and open states as plug **12** is inserted into receptacle **14**. Specifically, receptacle door **90** has two camming surfaces **92** and **94** which interact with camming surfaces **96** and **98**, respectively, on plug door **58**. Receptacle door **90** is hinged along one edge by providing posts **100** that snap into cutouts **102** in receptacle housing **70**. Means (not shown), such as a spring or camming linkages molded into the part, may be used to bias door **90** in the closed position. When plug **12** is inserted into receptacle **14,** forward end **52** and plug door **58** push against receptacle door **90**, raising and opening it. The ramped camming surface **94** then begins to forcibly abut camming surface **98** on plug door **58**, pushing door **58** to the side to reveal slots **54** and **56**. If plug **12** is thereafter removed from receptacle **14**, then ramped camming surface **92** similarly pushes against camming surface **96** as the plug is removed, sliding plug door **58** back into its closed position. Shroud **24** has grooves or indentations **104** and **106** to accommodate camming surfaces **92** and **94** when the plug is in the receptacle, which also serve to further stabilize the connection.

The receptacle may also have a door that acts as the latch for retaining the plug. In this alternative design (not shown), the plug body (shroud) has a notched area on its bottom side. The door in the receptacle is a rectangular, spring-loaded plate, with a tab (cantilever beam) protruding from its bottom when the door is in the closed position. When the plug is inserted into the receptacle, the door rotates from a vertical to a horizontal position. Once the plug is fully inserted, the notch clears the top edge of the door. Then the door springs back up a few degrees and bottoms out on the area in the notch. This provides the locking between the two parts. Removing the plug is accomplished by squeezing on the plug and tab portion of the door. This causes the door to return to its horizontal position and allows the plug to slide back out of the receptacle. The tab would be formed such that, when the plug is removed, there would not be enough friction to keep the finger on the tab. This construction provides for a simpler plug design.

The receptacle may further be modified with internal latches to be mounted in two different positions on the wall or bulkhead, a first position wherein it is fully operational and flush with the wall, and a second position wherein it projects slightly outward from the wall. This provides access to the interior of the receptacle for cleaning.

The plug-receptacle latching mechanism may advantageously be designed to prevent breakage of the plug assembly when the plug cable is pulled excessively, such as if someone trips over the cable. This is achieved by providing a latch geometry which allows the plug to be pulled out of the receptacle if the tension on the cable exceeds a given pull-out force. This results in the plug releasing from the receptacle rather than the cable pulling out of the plug, and this aspect is made more acceptable because of the automatic shutting of the plug door upon removal from the receptacle.

A plug-to-plug interconnection may also be provided, which utilizes two plugs of the form of plug **12** with no receptacle but, rather, with a coupling mechanism to receive both of the plugs (similar to a coupling sleeve used to interconnect ferrule-type optical connectors). The envisioned design would likely utilize an S-bend on both of the plug fibers, and a fiber stub located in the coupling mechanism, looped such that its terminal ends are adapted to abut the respective ends of the plug fibers.

All of the components of connector **10** (except plug boot **38**) may be formed of any durable material, preferably an injection moldable polymer such as polycarbonate, VALOX (a polyester sold by General Electric), or RADEL (a polyarylsulfone sold by Amoco). The material may include conductive fillers to render the components semiconductive in order to minimize triboelectric charging which can induce fiber end contamination. Boot **38** is preferably formed of low modulus copolyester elastomer such as that available from RTP of Winona, Minnesota, under material number 1559X67420B.

Assembly and installation of connector **10** is straightforward. Plug **12** is typically assembled in the factory, although it may easily be assembled in the field. In this regard, the term "pre-terminated" as used herein simply refers to the attachment of optical fibers to plug **12** or receptacle **14** regardless of whether such attachment occurs in the factory, the field, or elsewhere. It is also understood that plug **12** or receptacle **14** could be mounted on a jumper cable or patch cord with any kind of optical connector at the other end of the fibers. It is recommended that fibers be used which have a longer life when exposed to indoor environments, such as the high-strength fibers available from Minnesota Mining and Manufacturing Co. (3M).

Those fibers have a conventional core and cladding which is surrounded by a novel three-layer construction, as discussed in U.S.-A-5,381,504. Those skilled in the art will also appreciate that the connector of the present invention can accommodate discrete optical fibers or multifiber ribbons, as well as both singlemode and multimode fibers.

Fibers which are to be pre-terminated to either plug **12** or receptacle **14** should be stripped, cleaved and cleaned. If the fibers are in the form of a ribbon which is part of a bundled group of ribbons in a cable, then a portion of the cable jacket must first be cut back to reveal the ribbons. Most cables have several protective layers and each of these layers must be removed to provide access to the fiber ribbons. Similar steps must be taken to remove the protective layers of a cable having a single discrete fiber. After the fibers have been removed from the protective cable jacket, they are stripped. The stripped fibers are then ready for cleaving which may be accomplished using any one of several commercially available fiber cleavers, such as that shown in U.S.-A- 5,024,363. The cleave length for attachment of the fibers to plug **12** is the distance from fiber holder **18** which, in the preferred embodiment, is about 23 mm. For attachment of fibers to receptacle **14**, the cleave length is the distance from fiber holder **72** which, in the preferred embodiment, is about 15 mm. Any debris should be cleaned off the fibers using a lint-free cloth. Prior to removing the fibers from the cleaver, the craftsperson may inspect the fibers to confirm that the end faces on all fibers are acceptable, i.e., that they are smooth cleaves with no spikes. The fiber viewer disclosed in U.S.-A-5,210,647 may be used for this purpose. Once the craftsperson is satisfied that each of the fibers has an acceptable end face, the fibers may be removed from the cleaver. In the preferred embodiment, the fiber end faces are flat with a chamfered or beveled periphery (or at least partially beveled) to obtain the advantages associated with such a fiber end profile, as discussed more thoroughly in WO-A-95/07794. The fiber end faces may alternatively be radiused (generally spherical). The fibers may further optionally be provided with an asymmetric treatment, like cleaving so as to impart an angled end face, as taught in U.S.-A-5,048,908. If so, in order to minimize insertion losses and reflections, the fibers should be inserted so that the orientation of the angled end faces of one set of fibers (i.e., in plug **12**) complements the orientation of the angled end faces of the other set of fibers (i.e., in receptacle **14**). For the plug fibers, fiber preparation may be done after the fiber cable has been threaded through boot **38**.

Final assembly of plug **12** comprises the simple steps of clamping the fibers in the V-grooves of holder **18** and snapping shroud **24** onto holder **18**. An assembly fixture may be used to guide shroud **24** onto the plug fiber holder so as to avoid damaging the fibers as they are inserted into the shroud. The ends of the plug fibers should terminate about 0.5 mm from the end of the shroud. Completion of receptacle **14** is also simple. The receptacle fibers are clamped onto fiber holder **72** using clamping plate **80**, with the ends of the receptacle fibers terminating in the fiber-alignment grooves about 15 mm from the tips of fingers **82** and **84**. The receptacle fibers may be cleaved after securing them to the fiber holder. The fibers may be assembled into the holder using the V-groove to actually pick up the fiber holder from the cleaver, to avoid contamination of the fiber tips, if mating and guiding features are provided on one or both parts. A punch-down tool could also be used to simplify assembly. Fiber holder **72** is attached to housing **70**, first by pushing the pivot posts into cutouts **88**, and then snapping the studs into holes **89**. Care should be taken during placement of the fibers in the V-grooves and attachment of the holder to the receptacle to not contaminate the fiber tips.

Installation of connector **10** is equally straightforward. Receptacle **14** is optionally mounted to any desired surface by convenient means, such as latching arms **76** (other constructions could be molded into housing **70** for custom mounting). Several receptacles could also be mounted in a single module, and they can be designed for front or rear loading, or sliding from the side. After receptacle **14** is mounted, the connection is completed by simply inserting plug **12** into opening **74**. Plug **12** is released from receptacle **14** by latch **40**.

Figures 1 and 2 depict full insertion of the plug. As plug **12** is inserted, door **90** opens and cams door **58** open as described above, allowing fingers **82** and **84** to enter slots **54** and **56** respectively. Plug fibers **30** and **32** contact the fiber-alignment grooves in fiber holder **72**, and slide until their end faces abut the respective end faces of the receptacle fibers, and then become bowed when the plug is fully inserted. The plug fibers may undergo an S-shaped bend. All force at the fiber-to-fiber interface comes from the resilience (elastic deformation) of bowed fibers **30** and **32** which maintains a continuous compressive load between the ends. Connector **10** is preferably designed to maintain a minimum bend radius of 7.6mm (0.3 inch) on the fibers.

The dimensions of the various components of connector **10** may vary considerably depending upon the desired application. The following approximate dimensions are considered exemplary. Plug **12** has an overall length of 57 mm, a width of 12 mm, and a thickness of 8 mm, and plug fiber holder **18** provides clamping grooves that are 13 mm long. Plug shroud **24** extends 25 mm beyond holder **18**, providing an interior space which is 24 mm long, 10 mm wide and 6 mm high. Opening **74** of receptacle **14** is 12 mm x 10 mm. Its overall height and depth are **38** mm and 36 mm. Receptacle fiber holder **72** is 20 mm long (from the end where the fibers are clamped to the tips of fingers **82** and **84**), 12 mm wide and 1.5 mm thick. The fiber-alignment grooves in fingers **82** and **84** are 11.5 mm long and have a maximum depth of 2 mm which suitably accommodates most conventional optical fibers. The interior angle of the V-grooves should not be too narrow since this might result in excess friction with the fibers, but it also should not be too wide since this would not keep the fibers guided properly. A 90° interior angle is believed to be a good compromise.

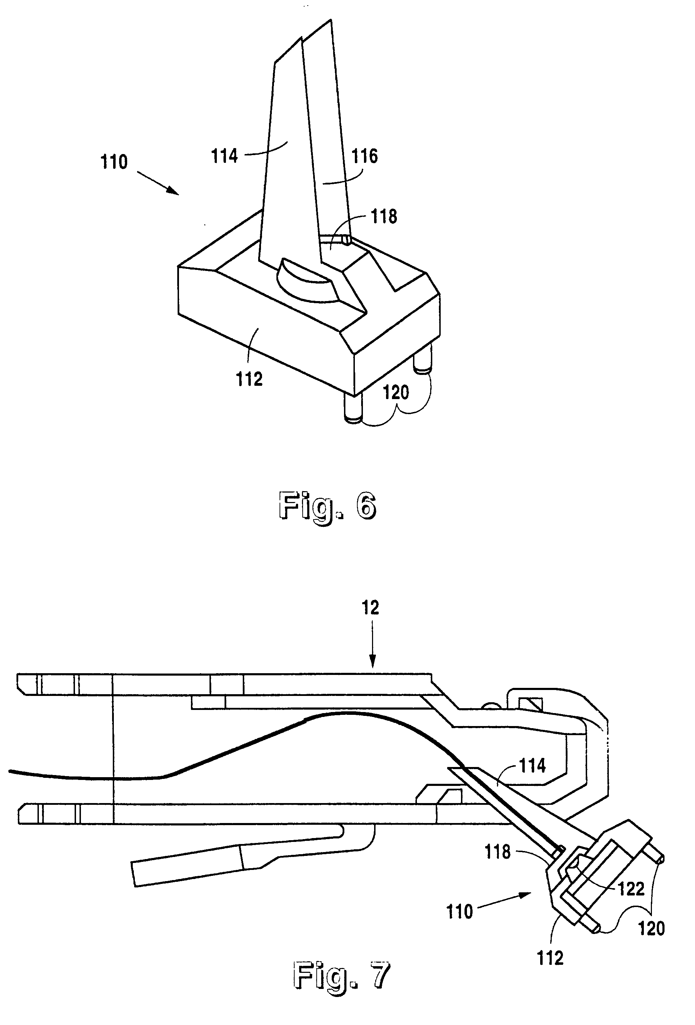

The present invention is not limited to connectors for fiber-to-fiber interconnection, but also includes connectors for terminating an optical fiber, such as to an active optical device. Figure 6 illustrates a termination fixture **110** adapted for use with an active optical device. Fixture **110** is essentially substituted for receptacle fiber holder **72**, and has a base **112** and a projection or finger **114** similar to fingers **82, 84** Finger **114** has a fiber-alignment groove **116** to receive one of the plug fibers, whose terminal end face comes to rest on a fiber stop or surface **118,** as shown in Figure 7. The material defining surface **118** is usually clear (i.e., transparent to the wavelength of light transmitted in the optical fibers), allowing the active optical device to be placed on the other side of base **112** whereby the light signal passes through the material; the material may be coated or otherwise fabricated to affect the light signal, such as controlling its intensity or polarizing it. Posts **120** formed on base **112** may be used to align and attach fixture **110** to the active optical device substrate, e.g., a printed circuit board (PCB). Fixture **110** preferably has a unitary construction of a clear, injection-moldable polymer such as ULTEM (a polyetherimide available from General Electric), and may further include a lens **122** formed opposite surface **118** to focus light from/to the fiber The active optical devices and supporting structures are beyond the scope of the present invention but may include, for example, photoelectric sensors or laser diodes. Other passive optical devices (beam splitters, stub fibers in ferrules, etc.) which direct the light to or from the active devices may be employed, and different geometries of the termination fixture may be used to direct or focus light to a particular location, including geometries which employ total internal reflection (TIR). The TIR method of coupling light from a bare fiber onto a photodetector, or from a light source into a fiber, using the present invention has a number of advantages. One is that the position of the fiber is determined by the fiber stop, allowing the plug fiber to be repeatably located in the same position. The position of the fiber end is thus predetermined by the tolerances on the molded part and the location accuracy of the active elements, i.e., the photodetector or light source, hence this obviates the need for active optical alignment. Another advantage is that, coupled with an S-bend of the fiber, the overall height of the transceiver module can be reduced. An S-bend could also be used in a connector for two parallel, but not coaxial, fibers. Finally, the transceiver electronics can be mounted on a board that lies in the same plane in which the connector is inserted.

A fiber stub may also be used in an active optical device termination, the stub (not shown) secured in a holder like receptacle holder **72**.

Besides providing for quick and easy connection and disconnection, connector **10** has several other advantages. As previously mentioned, it may easily be pre-terminated in the field as well as the factory. Even if the fibers in either the plug or receptacle do not terminate at exactly the desired position there will still be full fiber-to-fiber contact in the completed connection since the resilient stress of the bent fibers provides a positive abutment force; in other words, the tolerance in the relative positions of a fiber pair is eased by the slack in the plug fibers. Plug **12** is also inherently pull-proof due to this biasing. Tolerances are also not critical in the transverse position of a given fiber pair since V-grooves **36** serve to align the fibers and the fibers are biased toward the apex of the grooves. The surface finish of the fiber-alignment grooves should be smooth and the groove angle be well-defined; this finish is easy to fabricate using standard injection molding techniques. The V-groove preferably has a sharpness with no more than a 0.025 mm (0.001 inch) radius. It is preferable to use a material for the V-groove substrate which is hard, to resist abrasion, but also having a low coefficient of friction to minimize frictional forces on the fiber as it slides in the groove. Also, since the receptacle fibers enter housing **70** at an oblique angle (up to 90°) with respect to the plug axis, it requires very little depth for mounting. Moreover, the mounting methods are compatible with those of RJ45 jacks. Finally, the reduced part count and the fact that all parts can be injection molded contribute to a very low cost connector.

With further reference to Figures 8 and 9, those figures depict tools which may be used in conjunction with the present invention, to clean the tips of the various optical fibers. Figure 8 shows a tool **130** used to clean the tips of the fibers in plug **12**. Tool **130** has a body **132** adapted to be held in the hand, with an opening **134** in body **132** for receiving plug **12**. Tool **130** also has an actuation member or lever **136** pivotally attached to body **130** at **138**. In Figure 8, lever **136** is shown in the actuated position, in which state a push rod or tab **140** enters a hole or slot **142** in the top of the plug shroud, and contacts the plug fibers, forcing them out of the shroud through slots **54, 56**. In the unactuated position, lever **136** swings away from opening **134** and retracts push tab **140** so that plug **12** can enter tool **130** without interfering with the push tab. Lever **136** is preferably biased toward the unactuated position by e.g., a spring.

Opening **134** and lever **136** are located such that the plug fibers, when pushed through the shroud slots, are forcibly abutted against the adhesive side **144** of a strip of tape **146**. Tape **146** is peeled away from a tape roll **148** which is stored in tool body **132**. Two rollers **150** and **152** are provided to allow the tape to advance so that a fresh adhesive surface is presented to the fiber tips. To facilitate use, tape **146** may be wound about another roller **154** forming a ratchet wheel which engages a pawl **156**. Pawl **156** is in turn located on another handle or pivoting lever **158** attached to tool body at **160**. In this manner, the user may advance the tape and clean the plug fibers by squeezing handle **158** while holding the tool. Handle **158** may also be biased by, e.g., a spring, toward the outermost position.

Figure 9 shows a tool **162** used to clean the tips of the fibers in a modified receptacle **14'**. The shape of tool **162** is reminiscent of plug **12**, whereby it is adapted to be inserted into receptacle **14'** in a similar manner. Receptacle **14'** is generally identical to receptacle **14**, except for the provision of certain features designed to raise the receptacle fibers up out of the V-grooves for cleaning. These features include a fiber hold-down or retainer **164** and a tilt linkage **166**. Fiber retainer **164** is pivotally attached to the fiber holder at **168**, and includes a block or pad **170** located at one end of the retainer arm **172** adapted to push the fibers into the V-groove and keep them nested properly therein. Pad **170** may be molded into the fiber hold-down. The other end of retainer arm **172** has formed thereon a boss or button **174** which pushes against the receptacle fibers when retainer arm **172** is in the actuated position, as shown in Figure 9. Pushing of the fibers by boss **174** causes the fibers to deflect out of the V-grooves. Fiber retainer **164** is preferably biased, e.g., by a spring **176**, toward the unactuated position, i.e., pushing pad **170** against the fibers to maintain them in the V-grooves.

Tool **162** includes a body **178** which, like tool **130**, also houses a supply spool **180** of adhesive tape **182**. Rollers **184** and **186** serve to position tape **182** such that its adhesive side can again be advanced to clean the fiber tips. The fibers are deflected when tool **162** enters receptacle **14'** by means of tilt linkage **166**, which includes two tilt arms **188** and **190** fixed together at another pivot point **192**. A projection or actuator bump **194** formed on the front end of tool **162** pushes against tilt arm **188** as the tool is inserted into the receptacle. This in turn causes tilt arm **190** to rotate and push against a catch or finger **196** attached to fiber retainer **164**. Forcible contact between tilt arm **190** and finger **196** causes fiber retainer **164** to pivot about point **168**, thereby pushing boss **174** against the fibers and deflecting them out of the V-grooves. Tape **182** in tool **162** may be taken-up on another spool **198**, or exit tool body **178** in a manner similar to that shown in Figure 8 for tool **130**. A small dial or twist rod may be attached to take-up spool **198** and extend outside of body **178** to allow the user to advance the tape.

Although the invention has been described with reference to specific embodiments, this description is not meant to be construed in a limiting sense. Various modifications of the disclosed embodiment, as well as alternative embodiments of the invention, will become apparent to persons skilled in the art upon reference to the description of the invention. For example, although only two fibers pairs are shown connected in the figures, connector **10** could accommodate practically any number of fibers (or just a single pair). It is therefore contemplated that such modifications can be made without departing from the scope of the present invention as defined in the appended claims.

## Claims

1. A fiber optic termination device comprising:
- a plug (12) including
- a fiber holder (18) securing a terminal portion of an optical fiber (30; 32) at a location spaced from the end face,
- an elongate, hollow plug shroud (24) attached to and enclosing said fiber holder (18) with the unsecured terminal portion of said fiber (30; 32) extending in the interior of said plug shroud (24), which has a forward end (52) with a slot (54; 56) providing access to said unsecured terminal portion of said fiber (30; 32), and
- a plug door (58) slidably attached to said forward end (52) of said plug shroud (24), said plug door having a closed position wherein said plug door (58) covers said slot (54; 56) and an open position wherein said slot (54; 56) is unobstructed by said plug door (58); and
- a receptacle (14) including
- a receptacle housing (70) having an opening (74) sized to receive said forward end (52) of said plug shroud (24), said receptacle housing (70) having a projection (82; 84) arranged to enter said slot (54; 56) in said plug shroud (24), said projection member (82; 84) having a fiber-alignment groove therein located to receive said unsecured terminal portion of said fiber (30; 32) when said plug shroud (24) is inserted in said receptacle housing (70), and
- a receptable door (90) hingedly attached to said receptacle housing (70) at said opening (74),
whereby
- said plug door slides (58) sideways across said forward end (52) of said plug shroud (24);
- said plug door (58) has a camming surface (96; 98) formed thereon ; and
- said receptacle door (90) has a corresponding camming surface (92; 94) formed thereon and adapted to cam against said camming surface (96; 98) of said plug door (58) whereby upon insertion of said forward end of said plug shroud (24) in said receptacle housing (70) the interaction of the camming surfaces urges said plug door(90) sideways to said open position;

2. The fiber optic termination device of Claim 1 further comprising means (44, 46, 48) located in said interior of said plug shroud for limiting skewing of the unsecused terminal poriton of the fiber (30; 32).

3. The fiber optic termination device of Claim 1 or 2 wherein said plug shroud (24) is mechanically polarized to ensure a correct insertion orientation of the plug in the receptacle.

4. The fiber optic termination device of any of Claims 1 to 3 wherein said plug fiber holding means (18) comprises:
- a first block (22') having a landing member (42) extending in the same direction as the unsecured terminal portion of the fiber (30; 32), said landing member (42) having upstanding posts (44, 46, 48) which limit skewing of the unsecured terminal portion of the fiber (30; 32); and
- a second block (20') positioned on said first block (22'), at least one of said first and second blocks having a fiber-receiving groove (34') at an adjacent surface.

5. The fiber optic termination device of any one of claims 1 to 4 further comprising latch means (40) for releasably securing said plug shroud (24)to said receptacle (14).

6. The fiber optic termination device of Claims 4 and 5 wherein said landing member (42) has attached thereto said latch means (40).

7. The fiber optic termination device of Claim 5 or 6 further comprising means for releasing said latch means (40) when a predetermined tension is placed on said fiber.

8. The fiber optic termination device of any one of Claims 1 to 7 further comprising means for biasing said plug shroud (24) in an exit direction from said opening (74) of said receptacle housing (70).

9. The fiber optic termination device of any one of Claims 1 to 8 wherein said fiber (30; 32) extends generally straight within said plug shroud (24) when said plug shroud (24) is removed from said receptacle housing (70), but is sufficiently long such that when said plug shroud (24) is fully inserted in said receptacle housing (70), said fiber (30; 32) becomes bowed to maintain a continuous compressive load against a fiber stop surface (118) of said receptacle housing (70).

10. The fiber optic termination device of any one of Claims 1 to 9 wherein said receptacle (14) further has a receptacle fiber holder (72) securing a bare, terminal portion of another optical fiber (78) whose end face is located at an intermediate section (86) of said fiber-alignment groove of said projection (82; 84) of said receptacle housing (70).

11. The fiber optic termination device of Claim 10 further comprising fiber holding means (80) for securely retaining said other fiber (78) in an end of said fiber-alignment groove of said projection (82; 84) of said receptacle housing.

12. The fiber optic termination device of Claim 10 and 11 wherein said fiber stop surface (118) of said receptacle housing (70) is the end face of said other fiber (78) securable by said receptacle fiber holder (72).

13. The fiber optic termination device of Claim 10 and 11 wherein said fiber stop surface (118) is optically coupled with an optical device located in said receptacle (14).

## Patentansprüche

1. Faseroptische Abschlussvorrichtung mit:
- einem Stecker (12) mit:
- einem Faserhalter (18), mit dem ein Anschlussteil einer Optikfaser (30;32) an einer von der Endfläche beabstandeten Stelle befestigt ist;
- einer langgestreckten hohlen Steckerabschirmung (24), die an dem Faserhalter (18) angebracht ist und diesen umschließt, wobei sich der nicht befestigte Anschlussteil der Faser (30;32) in das Innere der Steckerabschirmung (24) erstreckt, die ein vorderes Ende (52) mit einem Spalt (54; 56) aufweist, der Zugriff auf den unbefestigten Anschlussteil der Faser (30;32) bietet, und
- einer gleitbar an dem vorderen Ende (52) der Steckerabschirmung (24) angebrachten Steckertür (58), die eine Schließposition, in der die Steckertür (58) den Spalt (54; 56) abdeckt, und eine Öffnungsposition, in der der Spalt (54;56) nicht von der Steckertür (58) blockiert wird, einnehmen kann; und
- einer Aufnahmevorrichtung (14) mit:
- einem Aufnahmevorrichtungsgehäuse (70) mit einer Öffnung (74), die derart dimensioniert ist, dass sie das vordere Ende (52) der Steckerabschirmung (24) aufnimmt, wobei das Aufnahmevorrichtungsgehäuse (70) einen Vorsprung (82;84) aufweist, der derart angeordnet ist, dass er in den Spalt (54;56) in der Steckerabschirmung (24) eingreift, wobei das Vorsprungselement (82;84) eine Faserausrichtnut aufweist, die den nicht befestigten Anschlussteil der Faser (30;32) aufnimmt, wenn die Steckerabschirmung (24) in das Aufnahmevorrichtungsgehäuse (70) eingesetzt ist, und
- einer an der Öffnung (74) an dem Aufnahmevorrichtungsgehäuse (70) angelenkten Aufnahmevorrichtungstür (90), wobei
- die Steckertür (58) über das vordere Ende (52) der Steckerabschirmung (24) gleitet;
- die Steckertür (58) eine abgeschrägte Fläche (96;98) aufweist; und
- die Aufnahmevorrichtungstür (90) eine entsprechende abgeschrägte Fläche (92;94) aufweist, die an der abgeschrägten Fläche (96,98) der Steckertür (58) angreift, wodurch beim Einsetzen des vorderen Endes der Steckerabschirmung (24) in das Aufnahmevorrichtungsgehäuse (70) die Steckertür (90) durch das Zusammenwirken der abgeschrägten Flächen seitlich in die offene Position gedrückt wird.

2. Faseroptik-Abschlussvorrichtung nach Anspruch 1, ferner mit einer Einrichtung (44,46,48) im Inneren der Steckerabschirmung zum Begrenzen einer schrägen Anordnung des unbefestigten Anschlussteils der Faser (30;32).

3. Faseroptik-Abschlussvorrichtung nach Anspruch 1 oder 2, bei der die Steckerabschirmung (24) zur Sicherstellung einer korrekten Ausrichtung beim Einsetzen des Steckers in die Aufnahmevorrichtung mechanisch polarisiert ist.

4. Faseroptik-Abschlussvorrichtung näch einem der Ansprüche 1 bis 3, bei der die Faserhalteeinrichtung (18) aufweist:
- einen ersten Block (22') mit einem Aufsetzelement (42), das sich in der gleichen Richtung erstreckt wie der nicht befestigte Teil der Faser (30;32), wobei das Aufsetzelement (42) aufrecht angeordnete Teile (44,46,48) aufweist, die eine schräge Anordnung des nicht befestigten Anschlussteils der Faser (30;32) begrenzen; und
- einen zweiten Block (20') auf dem ersten Block (22'), wobei mindestens einer der ersten und zweiten Blöcke eine Faseraufnahmenut (34') in einer angrenzenden Fläche aufweist.

5. Faseroptik-Abschlussvorrichtung nach einem der Ansprüche 1 bis 4, ferner mit einer Einrasteinrichtung (40) zum lösbaren Befestigen der Steckerabschirmung (24) an der Aufnahmevorrichtung (14).

6. Faseroptik-Abschlussvorrichtung nach Anspruch 4 und 5, bei der die Einrasteinrichtung (40) an dem Aufsetzelement (42) angebracht ist.

7. Faseroptik-Abschlussvorrichtung nach Anspruch 5 oder 6, ferner mit einer Einrichtung zum Lösen der Einrasteinrichtung (40), wenn eine vorbestimmte Spannung auf die Faser aufgebracht ist.

8. Faseroptik-Abschlussvorrichtung nach einem der Ansprüche 1 bis 7, ferner mit einer Einrichtung zum Vorspannen der Steckerabschirmung (24) in Richtung des Austritts aus der Öffnung (74) des Aufnahmevorrichtungsgehäuses (70).

9. Faseroptik-Abschlussvorrichtung nach einem der Ansprüche 1 bis 8, bei der die Faser (30;32) in der Steckerabschirmung (24) im wesentlichen gerade verläuft, wenn die Steckerabschirmung (24) aus dem Aufnahmevorrichtungsgehäuse (70) entfernt ist, die Faser (30;32) jedoch ausreichend lang ist, so dass sie sich, wenn die Steckerabschirmung (24) vollständig in das Aufnahmevorrichtungsgehäuse (70) eingesetzt ist, biegt, um eine kontinuierliche Drucklast gegen eine Faseranlagefläche (118) des Aufnahmevorrichtungsgehäuses (70) aufrechtzuerhalten.

10. Faseroptik-Abschlussvorrichtung nach einem der Ansprüche 1 bis 9, bei der die Aufnahmevorrichtung (14) ferner einen Aufnahmevorrichtungsfaserhalter (72) aufweist, mit dem ein freiliegender Anschlussteil einer weiteren Optikfaser (78) befestigt wird, deren Endfläche sich in einem Zwischenabschnitt (86) der Faserausrichtnut des Vorsprungs (82;84) des Aufnahmevorrichtungsgehäuses (70) befindet.

11. Faseroptik-Abschlussvorrichtung nach Anspruch 10, ferner mit einer Faserhalteeinrichtung (80) zum sicheren Festhalten der anderen Faser (78) an einem Ende der Faserausrichtnut des Vorsprungs (82;84) des Aufnahmevorrichtungsgehäuses.

12. Faseroptik-Abschlussvorrichtung nach Anspruch 10 und 11, bei der die Faseranlagefläche (118) des Aufnahmevorrichtungsgehäuses (70) die Endfläche der anderen, von dem Aufnahmevorrichtungsfaserhalter (72) zu befestigenden Faser (78) ist.

13. Faseroptik-Anschlussvorrichtung nach Anspruch 10 und 11, bei der die Faseranlagefläche (118) optisch mit einer in der Aufnahmevorrichtung (14) angeordneten optischen Vorrichtung gekoppelt ist.

## Revendications

1. Un dispositif de terminaison de fibre optique comprenant:
- une fiche (12) qui inclut :
- un support (18) de fibre qui s'attache à une partie terminale d'une fibre optique (30; 32) à un emplacement espacé de la face d'extrémité,
- un capot creux allongé (24) de fiche attaché audit support (18) de fibre et l'enfermant, la partie terminale non attachée de la fibre (30; 32) s'étendant dans l'intérieur dudit capot (24) de fiche qui comporte une extrémité avant (52) à fente (54; 56) ménageant un accès à ladite partie terminale non attachée de ladite fibre (30; 32), et
- une porte (58) de fiche attachée à coulissement à ladite extrémité avant (52) dudit capot (24) de fiche, ladite porte de fiche pouvant être dans une position fermée dans laquelle ladite porte (58) de fiche couvre ladite fente (54; 56) ou dans une position ouverte dans laquelle ladite fente (54; 56) n'est pas obstruée par ladite porte (58) de fiche; et
- un réceptacle (14) qui inclut:
- un boîtier (70) de réceptacle qui comporte une ouverture (74) dimensionnée pour recevoir ladite extrémité avant (52) dudit capot (24) de fiche, ledit boîtier (70) de réceptacle comportant une projection (82; 84) agencée de manière à entrer dans ladite fente (54; 56) dudit capot (24) de fiche, ledit organe de projection (82; 84) comportant une rainure d'alignement de fibre qui y est ménagée pour recevoir ladite partie terminale non attachée de ladite fibre (30; 32) lorsque ledit capot (24) de fiche est inséré dans ledit boîtier (70) de réceptacle, et
- une porte (90) de réceptacle attachée à charnière audit boîtier (70) de réceptacle à ladite ouverture (74),
de sorte que
- ladite porte de fiche (58) coulisse latéralement transversalement à ladite extrémité avant (52) dudit capot (24) de fiche;
- ladite porte (58) de fiche comporte une surface de came (96; 98) qui y est formée; et
- ladite porte (90) de réceptacle comporte une surface de came correspondante (92; 94) qui y est formée et est apte à intervenir comme came contre ladite surface de came (96; 98) de ladite porte (58) de fiche, de sorte que l'interaction des surfaces de cames sollicite latéralement ladite porte (90) de fiche vers ladite position ouverte lors de l'insertion de ladite extrémité avant dudit capot (24) de fiche dans ledit boîtier (70) de réceptacle.

2. Le dispositif de terminaison de fibre optique selon la revendication 1, qui comprend en outre un moyen (44, 46, 48) disposé dans ledit intérieur dudit capot de fiche pour limiter un décalage oblique de la partie terminale non attachée de la fibre (30; 32).

3. Le dispositif de terminaison de fibre optique selon la revendication 1 ou 2, dans lequel ledit capot (24) de fiche est polarisé mécaniquement pour assurer une orientation correcte de la fiche lors de son insertion dans le réceptacle.

4. Le dispositif de terminaison de fibre optique selon l'une quelconque des revendications 1 à 3, dans lequel ledit moyen de support (18) de fibre de fiche comprend:
- un premier bloc (22') qui comprend un organe de point d'aboutissement (42) qui s'étend dans la même direction que la partie terminale non attachée de la fibre (30; 32), ledit organe de point d'aboutissement (42) comportant des montants dressés (44, 46, 48) qui limitent un décalage oblique de ladite partie terminale non attachée de la fibre (30; 32); et
- un deuxième bloc (20') positionné sur ledit premier bloc (22'), au moins l'un desdits premier et deuxième blocs comportant une rainure de réception (34') de fibre à une surface adjacente.

5. Le dispositif de terminaison de fibre optique selon l'une quelconque des revendications 1 à 4, qui comprend en outre un moyen de verrou (40) pour attacher de façon détachable ledit capot (24) de fiche audit réceptacle (14).

6. Le dispositif de terminaison de fibre optique selon la revendication 4 ou 5, dans lequel ledit moyen de verrou (40) est attaché audit organe de point d'aboutissement (42).

7. Le dispositif de terminaison de fibre optique selon la revendication 5 ou 6, qui comprend en outre un moyen de détachement dudit moyen de verrou (40) lorsqu'une tension prédéterminée est exercée sur ladite fibre.

8. Le dispositif de terminaison de fibre optique selon l'une quelconque des revendications 1 à 7, qui comprend en outre un moyen de sollicitation dudit capot (24) de fiche dans une direction de sortie hors de ladite ouverture (74) dudit boîtier (70) de réceptacle.

9. Le dispositif de terminaison de fibre optique selon l'une quelconque des revendications 1 à 8, dans lequel ladite fibre (30; 32) s'étend généralement de façon rectiligne à l'intérieur dudit capot (24) de fiche lorsque ledit capot (24) de fiche est enlevé dudit boîtier (70) de réceptacle, mais est suffisamment longue pour que ladite fibre (30; 32) devienne incurvée, lorsque ledit capot (24) de fiche est totalement inséré dans ledit boîtier (70) de réceptacle, afin de maintenir un effort de compression contenu contre une surface (118) d'arrêt de fibre dudit boîtier (70) de réceptacle.

10. Le dispositif de terminaison de fibre optique selon l'une quelconque des revendications 1 à 9, dans lequel ledit réceptacle (14) comporte en outre un support (72) de fibre de réceptacle qui attache une partie terminale nue d'une autre fibre optique (78) dont la face d'extrémité est disposée à une section intermédiaire (86) de ladite rainure d'alignement de fibres de ladite projection (82; 84) dudit boîtier (70) de réceptacle.

11. Le dispositif de terminaison de fibre optique selon la revendication 10, qui comprend en outre un moyen de maintien (80) de fibre pour retenir de façon sûre ladite autre fibre (78) dans une extrémité de ladite rainure d'alignement de fibres de ladite projection (82; 84) dudit boîtier de réceptacle.

12. Le dispositif de terminaison de fibre optique selon la revendication 10 ou 11, dans lequel ladite surface d'arrêt (118) de fibre dudit boîtier (70) de réceptacle est la face d'extrémité de ladite autre fibre (78) qui peut être attachée par ledit support (72) de fibre de réceptacle.

13. Le dispositif de terminaison optique selon la revendication 10 et 11, dans lequel ladite surface d'arrêt (118) de fibre optique est couplée optiquement à un dispositif optique disposé dans ledit réceptacle (14).
